Europäisches Patentamt

European Patent Office

Office européen des brevets

(11) Publication number: **0 060 713**
**B1**

(12) **EUROPEAN PATENT SPECIFICATION**

(45) Date of publication of patent specification: **20.08.86**

(51) Int. Cl.⁴: **F 16 G 5/20**

(21) Application number: **82301324.8**

(22) Date of filing: **16.03.82**

(54) **A V-belt.**

(30) Priority: **17.03.81 JP 37711/81**

(43) Date of publication of application:
**22.09.82 Bulletin 82/38**

(45) Publication of the grant of the patent:
**20.08.86 Bulletin 86/34**

(84) Designated Contracting States:
**AT CH DE FR GB IT LI NL SE**

(56) References cited:
**EP-A-0 014 561**
**GB-A- 509 567**
**JP-Y-52 020 623**
**US-A-2 167 384**
**US-A-3 818 741**
**US-A-3 820 409**
**US-A-3 835 720**
**US-A-3 968 703**

(73) Proprietor: **MITSUBOSHI BELTING LTD.**
**No. 1-21, Hamazoedori 4-Chome Nagata-ku**
**Kobe-shi Hyogo (JP)**

(72) Inventor: **Matsumura, Kaname**
**No. 8-27, Chaenba-cho**
**Akashi-City Hyogo, pref. (JP)**
Inventor: **Komai, Takahiko**
**No. 114-1, Kitayama**
**Amida-cho, Takasago-city Hyogo, pref. (JP)**

(74) Representative: **Jones, Michael Raymond et al**
**HASELTINE LAKE & CO. Hazlitt House**
**28 Southampton Buildings Chancery Lane**
**London WC2A 1AT (GB)**

## Description

This invention relates to a raw edged V-belt, and more particularly, but not exclusively, relates to the construction of raw-edge; variable power transmission V-belts with the width of the top surface thereof being greater than the height thereof.

V-belts require high resistance to lateral pressure since they transmit power to the cooperating pulleys by a "wedge effect". Particularly high resistance to lateral pressure is required where the V-belt has a wide top surface. Various attempts have been made in the prior art to enhance the lateral pressure resistance. Such attempts have been directed to reinforcing the portion of the belt under the compression section.

Illustratively, one such prior art belt was constructed with a plurality of short fibres embedded in transverse orientation between the load-carrying section and the reinforcing member under the compression section. Such belts, however, were found to be unsatisfactory in that wear and cracking of the compression section occurred due to friction with the pulley. Further, such belts were subject to peeling separation of the tension cords and compression section due to stresses concentrated in the portion under the compression section during belt inflection. Further, when used with small diameter pulleys, such belts were found to be less inflective, and the portion under the compression section was significantly heated causing degradation of the compression section.

Another attempt to provide improved lateral pressure resistance and inflective characteristics is illustrated in Japanese Utility Model Publication No. 1977—20623. As disclosed therein, the V-belt is arranged with cogs in the bottom portion thereof. Fabrics are embedded in the cogged area, the fabrics being impregnated with natural fibre, rubber, synthetic resin, or the like. Similarly, European Patent Application Publication No. 0014561 discloses a belt in which plies of rubbered fabric, woven in plain or twill weave from yarns which are high in stretchability extending longitudinally of the belt and yarns which are high in rigidity extending transversely of the belt, are disposed in the compression section. Although such cogged V-belts provide some improved resistance to lateral pressure due to the embedment therein of said fabrics, such belts have been found to be too hard and inflexible for long trouble-free life.

United States Patent Specification No. 3,968,703 discloses a cogged belt having layers of transversely extending tensile cords in its compression section, the layers being equally spaced in the longitudinal extent of the belt. United States Patent Specification No. 3,935,720 discloses a cogged belt having randomly dispersed transversely extending strength members. Although these belts provide some resistance to lateral pressure during their use, the formation of the compression section is such that stresses are concentrated in the transversely extending cords during inflection of the belt causing wear and possible peeling of the cord layers.

According to the present invention there is provided a raw edge cogged V-belt (10) having: a compression section defined by a plurality of longitudinally spaced cogs (16) formed of rubber; and a plurality of layers (19) of transversely extending reinforcing fabric cords, each layer extending respectively longitudinally of the belt to extend inwardly from valley portions of the cogs into peak portions thereof, characterised in that transversely oriented, short reinforcing fibres (23) are distributed in the cogs and in that the layers of transversely extending reinforcing fabric cords have a variable spacing therebetween longitudinally of the belt such that the layers are closely juxtaposed at the valley portions of the cogs and significantly spaced in the peak portions thereof to provide a more uniform resistance to lateral pressure in the cogs.

The reference numerals are used above to indicate one particular possibility for each feature of the invention as described in the illustrated exemplary embodiment: they are in no way to be construed as limiting the feature of the invention to that particular possibility.

By means of the present invention, the above-discussed problems of the prior art V-belts and cogged belts can be reduced or eliminated.

The provision of the plurality of short fibres embedded laterally between individual tire cord layers and in the cogged portion causes the lateral pressure resistance to be uniform throughout the cogged portion and allow dispersion of stresses which are otherwise concentrated in the tire cord during belt inflection, thereby preventing wear and cracking of the short fibres, i.e. Stiflex, extending between the tire cord. Such V-belts provide highly improved lateral pressure resistances and inflection characteristics.

The belt construction of the present invention is extremely simple and economical of construction while yet providing the highly desirable features discussed above.

Other features and advantages of the invention will be apparent from the following description taken in connection with the accompanying drawing wherein:

FIGURE 1 is a transverse cross section of a cogged, variable V-belt embodying the invention;

FIGURE 2 is a fragmentary longitudinal section thereof; and

FIGURE 3 is a graph comparing the wear rate of a variable belt embodying the invention with that of a conventional variable belt.

In the illustrative embodiment of the invention as disclosed in the drawing, a V-belt generally designated 10 includes an upper cushion layer 11 and a lower cushion layer 12 with tensile cords 13 extending longitudinally of the belt embedded therebetween.

The cushion layers 11 and 12 are formed of a resilient material, such as rubber, and in the illustrated embodiment, are formed of natural rubber, styrene butadiene rubber, chloroprene rubber, nitrile rubber, or a rubber blended of two or more of these rubbers.

As further shown, the cushion rubber layers 11 and 12 may be provided with laterally extending reinforcing fibers 14, one example of which is Stiflex 5.

The upper surface portion of the belt is defined by a plurality of fabric layers, and in the illustrated embodiment, includes three such fabric layers 15. The fabric of layers 15 is preferably a bias, or wide angle, fabric with warp and weft cotton yarns. Alternatively, the fabric may comprise an elastic fabric consisting of warp yarns of woolly-finished crimped nylon and weft yarns of nylon.

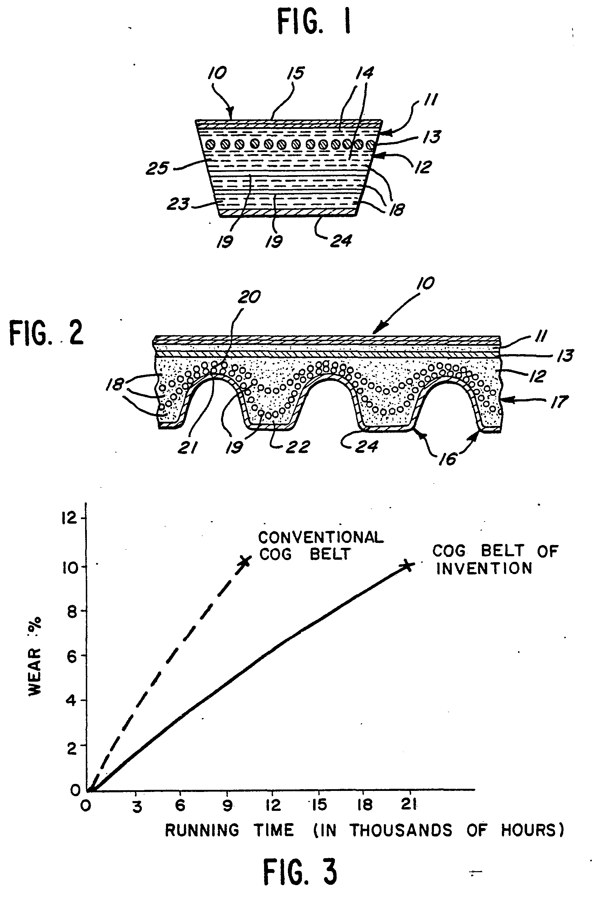

In the illustrated embodiment, the tensile cords are formed of a low-stretch, high strength material, such as a synthetic resin fibre. Illustratively, the tensile cords may be formed of polyester fibres, aliphatic polyamide fibres, aromatic polyamide fibres, such as Kevlar, or glass fibres. As shown in Figure 1, the tensile cords extend in laterally spaced relationship to each other, and as illustrated in Figure 2, extend parallel to the longitudinal direction of the belts.

Belt 10 is arranged to define a cogged belt construction wherein the lower layer is arranged to define a plurality of longitudinally spaced, transversely extending cogs 16. As shown in Figure 2, the cogs are equally longitudinally spaced. Thus, the cogs effectively define the compression section generally designated 17 of the belt. As shown, the compression section defining the cogs is defined by a plurality of rubber layers 18 having embedded therein a plurality of layers 19, in this case two layers, of reinforcing fabric cords wherein the cords extend transversely to the longitudinal extent of the belt and wherein the layers extend serpentinely in the longitudinal direction, as seen in Figure 2. The cords, in the illustrated embodiment, are formed of suitable reinforcing fiber material, such as cotton, polyester resin, aliphatic polyamide fibres, aromatic polyamide fibres, glass fibres, etc.

As further illustrated in Figure 2, the two illustrated layers 19 of the reinforcing fabric of the compression section may be effectively in contact with each other as at the position 20 adjacent the valley portion 21 of the cog 16. However, as further shown in Figure 2, the fabric layers 19 are substantially separated in the peak portion 22 of the cog so as to provide uniform distribution of the reinforcement of the cogs in the resistance to lateral pressure during use of the belt. By effectively spacing the layers in the peak portions 22, peeling of the cord layers, as by inflection of the belt portion, is effectively avoided. Thus, improved, long troublefree life of the belt is provided.

As will be obvious to those skilled in the art, the two-layer configuration of the illustrated embodiment is exemplary only. Thus, any number of layers may be provided within the scope of the invention as desired.

In addition to the layers 19 of reinforcing cords rigidity of the compression section 17 is provided by the inclusion of transverse short reinforcing fibres 23, illustratively in the illustrated embodiment comprising Stiflex 5, in the rubber cushion portions 18 of the compression section.

As further shown in Figures 1 and 2, the inner surface of the cogs may be covered with a suitable fabric 24 to provide further improved rigidity of the cogs. Fabric 24 illustratively comprises a bias fabric, a wide angle fabric with warp and weft yarns disposed at an angle between 80° and 150° to each other, or an elastic fabric with warp yarns of crimped woolly nylon.

The transverse reinforcing cords of layers 19 of the compression section are advantageously arranged to extend at an angle of between 0° to 30° to the perpendicular from the general longitudinal axis of the belt so as to be effectively bias-laid. Where desired, alternating layers are preferably oppositely biased.

As will be obvious to those skilled in the art, the utilization of the reinforcing cords and the transverse short fibers, such as Stiflex 5 fibres, is efficacious in V-belts, as well as in cog belts, in providing improved lateral pressure resistance and inflective characteristics.

Referring to Figure 3, the improved results obtained by the present invention are illustrated. As shown therein the ratio of running time to the wear of the raw edge sides 25 of the belt is substantially improved in the cog belt of the invention over the conventional cog belts. More specifically, a 10% wear of the side edges 25 of the belt occurs at approximately 10,000 hours of running time with conventional cog belt, whereas approximately 21,000 hours of running time was achieved with a cog belt of the invention before 10% wear on the side edges was reached. Thus, the cog belt of the invention offers a useful life of over twice that of the conventional belts wherein no transverse reinforcing cords 19 are employed.

In determining the results of Figure 3, the cog belt of the invention was a belt as described above utilizing three layers 19 of transverse cords embedded in cushion rubber having Stiflex 5 fibres provided therein. The conventional cog belt was similar but did not include any layer of transverse fabric cords. The test was run in an apparatus using a drive pulley operating at 1720 rpm, a driven pulley operating at 750 rpm driving a load of 2 hp.

The construction of a belt in accordance with the present invention provides inflective characteristics with substantially reduced side edge wear resulting from improved resistance to lateral pressure. Thus, the belts provide improved performance in a wide range of industrial applications, such as automobiles, agricultural machines, manufacturing machines, etc.

The foregoing disclosure of specific embodiments is illustrative of the broad inventive concepts comprehended by the invention.

**Claims**

1. A raw edge cogged V-belt having: a compression section defined by a plurality of longitudinally spaced cogs formed of rubber; and a plurality of layers of transversely extending reinforcing fabric cords, each layer extending respectively longitudinally of the belt to extend inwardly from valley portions of the cogs into peak portions thereof, characterised in that transversely oriented, short reinforcing fibres are distributed in the cogs and in that the layers of transversely extending reinforcing fabric cords have a variable spacing therebetween longitudinally of the belt such that the layers are closely juxtaposed at the valley portions of the cogs and significantly spaced in the peak portions thereof.

2. A raw edge cogged V-belt as claimed in claim 1, wherein at least three layers of the reinforcing cords are provided, the spacing between adjacent layers in a transverse plane through the V-belt being substantially equal.

3. A raw edge cogged V-belt as claimed in any preceding claim, wherein the layers at the valley portions are in contact with each other.

4. A raw edge cogged V-belt as claimed in any preceding claim, wherein the cords are biased laid to extend at an angle of from 0° to 30° to the perpendicular from the general longitudinal axis of the belt.

5. A raw edge cogged V-belt as claimed in any preceding claim, wherein the cords of every alternate layer are biased laid to extend at an angle of up to 30° to the perpendicular from the general longitudinal axis of the belt and the cords of the other layers are oppositely biased laid to extend at an angle of up to 30° to the perpendicular from the general longitudinal axis of the belt.

6. A raw edge cogged V-belt as claimed in any preceding claim, wherein said cords are formed of natural fibres.

7. A raw edge cogged V-belt as claimed in any one of claims 1 to 5, wherein said cords are formed of synthetic resin fibres.

8. A raw edge cogged V-belt as claimed in any one of claims 1 to 5, wherein said cords are formed of glass fibres.

## Patentansprüche

1. Gezahnter Keilriemen mit roher Kante, welcher einen von mehreren in Längsrichtung mit Abstand voneinander liegenden und aus Gummi gebildeten Zähnen definierten Druckabschnitt und mehrere Lagen von sich in Querrichtung erstreckenden Verstärkungsfäden aufweist, wobei sich jede Lage solcherart in Längsrichtung des Riemens erstreckt, daß sie sich von einwärts der Talbereiche der Zähne in Scheitelbereiche derselben erstreckt, dadurch gekennzeichnet, daß in den Zähnen kurze Verstärkungsfasern in Querrichtung orientiert verteilt sind und daß die Lagen von sich in Querrichtung erstreckenden Verstärkungsfäden in Längsrichtung des Riemens einen solcherart veränderlichen Abstand zwischen sich besitzten, daß die Lagen in den Talbereichen der Zähne einander nahe benachbart sind und in den Scheitelbereichen der Zähne beträchtlichen Abstand voneinander besitzen.

2. Gezahnter Keilriemen mit roher Kante nach Anspruch 1, worin zumindest drei Lagen von Verstärkungsfäden vorgesehen sind und der Abstand benachbarter Lagen in einer durch den Keilriemen verlaufenden Querebene im wesentlichen gleich ist.

3. Gezahnter Keilriemen mit roher Kante nach einem der vorhergehenden Ansprüche, worin die Lagen in den Talbereichen miteinander in Berührung stehen.

4. Gezahnter Keilriemen mit roher Kante nach irgendeinem der vorhergehenden Ansprüche, worin die Verstärkungsfäden so schräg verlegt sind, daß sie sich mit einem Winkel von 0° bis 30° zur Senkrechten auf die allgemeine Längsachse des Riemens erstrecken.

5. Gezahnter Keilriemen mit roher Kante nach irgendeinem der vorhergehenden Ansprüche, worin die Verstärkungsfäden jeder alternierenden Lage so schräg verlegt sind, daß sie sich mit einem Winkel von bis zu 30° auf die Senkrechte zur allgemeinen Längsachse des Riemens erstrecken und die Verstärkungsfäden der anderen Lagen in entgegengesetztem Sinne solcherart schräg verlegt sind, daß sie sich mit einem Winkel von bis zu 30° zur Senkrechten auf die allgemeine Längsachse des Riemens erstrecken.

6. Gezahnter Keilriemen mit roher Kante nach irgendeinem der vorhergehenden Ansprüche, worin die Verstärkungsfäden von Naturfasern gebildet sind.

7. Gezahnter Keilriemen mit roher Kante nach irgendeinem der Ansprüche 1 bis 5, worin die Verstärkungsfäden von Kunstharzfasern gebildet sind.

8. Gezahnter Keilriemen mit roher Kante nach irgendeinem der Ansprüche 1 bis 5, worin die Verstärkungsfäden von Glasfasern gebildet sind.

## Revendications

1. Courroie trapézoïdale dentée à bords bruts présentant: une section de compression délimitée par une série de dents espacées dans le sens de la longueur et formée de caoutchouc; et une série de nappes de cablés en tissu de renforcement s'étendant dans le sens transversal, chaque nappe s'étendant respectivement dans le sens de la longueur de la courroie de manière à s'étendre vers l'intérieur depuis des parties-vallées des dents jusqu'à des parties-pics de celles-ci, caractérisée en ce que des fibres de renforcement courtes, orientées dans le sens transversal, sont réparties dans les dents et en ce que les nappes de cablés en tissu de renforcement s'étendant dans le sens transversal présentent un espacement variable entre elles dans le sens de la longueur de la courroie de manière telle que les nappes soient étroitement juxtaposées à l'endroit des parties-vallées des dents et espacées de façon notable dans leurs parties-pics.

2. Courroie trapézoïdale dentée à bords bruts telle que revendiquée dans la revendication 1, dans laquelle il est prévu au moins trois nappes de cablés de renforcement, l'espacement entre les nappes adjacentes dans un plan transversal à travers la courroie trapézoïdale étant sensiblement régulier.

3. Courroie trapézoïdale dentée à bords bruts telle que revendiquée dans n'importe quelle revendication précédente, dans laquelle les nappes sont en contact l'une de l'autre à l'endroit des parties-vallées.

4. Courroie trapézoïdale dentée à bords bruts telle que revendiquée dans n'importe quelle revendication précédente, dans laquelle les cablés sont disposés obliquement de manière à s'étendre sous un angle allant de 0° à 30° par rapport à la perpendiculaire à l'axe longitudinal général de la courroie.

5. Courroie trapézoïdale dentée à bords bruts telle que revendiquée dans n'importe quelle revendication précédente, dans laquelle les cablés d'une nappe sur deux, sont disposés obliquement de manière à s'étendre sous un angle pouvant atteindre 30° par rapport à la perpendiculaire à l'axe longitudinal général de la courroie et les cablés des autres nappes sont disposés suivant une inclinaison de sens opposé de manière à s'étendre sous une angle pouvant atteindre 30° par rapport à la perpendiculaire à l'axe longitudinal général de la courroie.

6. Courroie trapézoïdale dentée à bords bruts telle que revendiquée dans n'importe quelle revendication précédente, dans laquelle lesdits cablés sont formés de fibres naturelles.

7. Courroie trapézoïdale dentée à bords bruts telle que revendiquée dans l'une quelconque des revendications 1 à 5, dans laquelle lesdits cablés sont formés de fibres de résine synthétique.

8. Courroie trapézoïdale dentée à bords bruts telle que revendiquée dans l'une quelconque des revendications 1 à 5, dans laquelle lesdits cablés sont formés de fibres de verre.

0 060 713

FIG. I

FIG. 2

FIG. 3